# EUROPEAN PATENT SPECIFICATION

(11) **EP 0 424 668 B1**
(45) Date of publication and mention of the grant of the patent: **08.06.1994**
(21) Application number: 90118085.1
(22) Date of filing: 20.09.1990
(51) Int. Cl.: B03B 9/06

(54) **Plant for recovering inert material contained in toxic-noxious industrial waste**
Anlage zur Rückgewinnung von inerten Materialien aus giftigen schädlichen Industrieabfällen
Installation pour récupérer des matières inertes de déchets industriels nocifs-toxiques

(30) Priority: 25.10.1989 IT 4687889
(43) Date of publication of application: 02.05.1991
(73) Proprietor: Rivi, Carlo, I-42019 Scandiano, Reggio Emilia (IT)
(72) Inventor: Rivi, Carlo, I-42019 Scandiano, Reggio Emilia (IT)

(56) References cited:
- WO-A-89/04212
- FR-A- 2 268 563
- GB-A- 1 488 215
- US-A- 4 153 207

## Description

This invention relates to a plant for recovering inert material contained in toxic-noxious industrial waste containing a high volume percentage of inert material, in particular ceramic industry waste.

The waste produced by many industries, often of the type classified as toxic-noxious, has in the past been dumped where it occurred or where it was most convenient and least costly to do so. Although this is no longer allowed, situations of this type still unfortunately occur, but more rarely.

Consequently illicit toxic-noxious material dumps have arisen, and still sometimes illegally arise, in all imaginable locations, especially in highly industrial zones.

Because of the type of waste which they contain, such dumps clearly constitute a serious danger to the environment and to the health of the population.

As a result of a more widely felt ecological conscience, the competent public bodies have realised the need to act to remedy the environmental damage caused by said dumps, the tendency being to promote the improvement and bonification of the areas which they cover.

It has been verified that the toxic-noxious waste of certain types of industry in reality consists to a large extent of inert material which if separated from the actual toxic-noxious part could be usefully used as inerts. This is particularly true in the case of ceramic industry waste, which is generally concentrated in determined zones where the raw material is easily obtainable. In these zones there is consequently a concentration of waste dumps of this type, with serious environmental consequences.

It has also been realised that by removing the inert material from the waste, there would be the considerable further advantage of drastically reducing the volume of toxic-noxious material to be conveyed to the controlled dumps set up to receive such toxic-noxious waste.

WO-A-8904212 discloses a method and a plant for treating waste materials of the kind gathened in municipalities as, in order to separate the various kind of waste materials (organic material, glass, plastic ferrous and non-ferrous metals). The waste is passed in an intensive magnetic field generated by a magnet for separating ferrous material. The remainder materials are fed onto a rotary disc screen removing dirt, small organic materials, glass, plastics and non-ferrous metal particles, the separated small particles being fed out and an air knife separating remaining heavies from recovered organic material and plastics.

Organic materials are fed into an acqueous-medium rotating drum to reduce them into a pulp by combination of a horizontal flow with water action, heat and mechanical energy to conduct defibration. A pulper receives the pulp material from the rotary drum, while an anaerobic separator receives the sludge.

The object of the present invention is to provide a plant for recovering the inert material contained in industrial waste classified as toxic-noxious, of the type containing a high volume percentage of inerts such as ceramic industry waste, in which the inerts have a rather large and variable particle size (normally exceeding 10 mm), whereas the toxic-noxious part is of lesser particle size or in any event is able to form a slurry when treated with water.

Said object is attained by the plant according to the invention, comprising a feed hopper for the toxic-noxious waste material; a rotary screen continuously fed by the feed hopper to separate the finer part of the toxic-noxious waste material; a slurrying unit fed with the remaining material leaving the rotary screen; a vibrating mesh screen fed with the slurry leaving the slurrying unit to separate the larger slurry pieces of the toxic-noxious waste material; means for washing the remaining material leaving the slurrying unit, which material forms wet inert material; one or more filter press(es) fed with the slurry which passes through the vibrating mesh screen, the press(es) producing panels of the toxic-noxious material; purification meals for the dirty water leaving the filter press(es) to obtain clean water; and recirculation means for the obtained clean water, to return this latter to the slurrying unit.

Using the plant as described in terms of its essential characteristics, wet inert material is obtained from the slurrying unit having a particle size which is variable but exceeds a predetermined minimum value. This inert material can be used for example for back-filling or similar uses. Incoherent toxic-noxious material is obtained from the rotary screen for conveying to a controlled dump. Further wet toxic-noxious material in the form of panels is obtained from the filter presses. Finally, a small quantity of wet toxic-noxious material is obtained from the vibrating mesh screen.

It is important to note that the plant has no liquid effluent, this being a significant result.

In this respect, the water used in the slurrying unit is largely recovered and recycled, except for the small quantity contained in the inert material obtained, in the panels of toxic-noxious material produced by the filter presses, and in the toxic-noxious material separated by the vibrating screen. The initial water quantity must therefore be made up. Clean mains water or well water can be used for this make-up. The clean make-up water is conveniently used for washing the inert material leaving the slurrying unit before this water is fed into tie slurrying unit itself.

A tank is suitably provided to collect the slurry leaving the vibrating mesh screen. The filter press or presses draw the slurry from said tank.

A tank is also suitably provided for the dirty water leaving the filter press or presses, the water purification plant drawing from said tank.

The handling of the solid material between the various constituent units of the described plant and the removal of the obtained materials are conveniently accomplished by suitable conveyor belts.

These include a conveyor belt for conveying the waste material from the hopper to the rotary screen, a further conveyor belt for removing the toxic-noxious material discharged from the rotary screen, a further conveyor belt for removing the inert material leaving the slurrying unit, and a final conveyor belt for removing the toxic-noxious material retained by the vibrating screen.

The operation of the plant should be apparent from the aforegoing description, however a short description will be given for greater clarity.

The material originating from the illicit dumps is fed to the rotary screen. As stated, this feed takes place via a feed hopper into which said material is gradually loaded, and which feeds the material continuously. The rotary screen separates the finer particles, the dimensions of these latter depending on the type of material to be treated. In the case of waste from the ceramic industry, the rotary screen should separate particles up to a size of 10 mm.

These particles mostly consist of toxic-noxious substances, which are thus accumulated read) for despatch to controlled dumps.

The remaining material leaves the other end of the rotary screen and is fed to the slurrying unit, which is also fed with water.

The actual inert material leaves the other end of the slurrying unit in a wet state, whereas the slurry which forms is fed into the vibrating screen, which retains solids larger than a certain predetermined size. For example, in the specific case of ceramic industry waste, the screen will have a 7 mm mesh size. The thus separated slurry solids, formed of toxic-noxious material, are then accumulated to be despatched to controlled dumps.

The slurry which passes through the vibrating mesh screen is fed to a filter press or a series of filter presses. Conveniently the slurry is collected in a slurry tank, from which the filter presses draw.

The dirty water leaving the filter presses is then fed to a purification plant, from which clean water leaves to be recycled to the slurrying unit.

The slurry panels obtained from the filter presses form part of the toxic-noxious material to be despatched to controlled dumps.

The inert useful material obtained can be used as such, for example as back-fill in the building industry.

The described plant upgrades waste material which in its original state not only has no value but creates serious ecological problems.

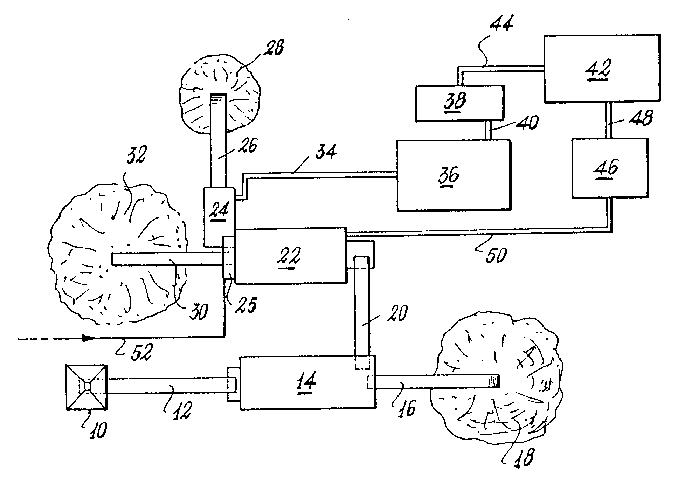

The invention will he more apparent from the description of one embodiment thereof given hereinafter by way of non-limiting example. In this description reference is made to the accompanying drawing, the single figure of which represents an extremely schematic plan view of the plant according to the invention. The plant consists of a feed hopper 10 into which the material to be treated, originating from illicit dumps or the like, is loaded by a mechanical shovel. The material which continuously leaves the hopper 10 is collected on a conveyor belt 12 which feeds a rotary screen 14 in which the finer granules are separated from the remainder of the treated material. In the case of waste from the ceramics industry the drum of the rotary screen can for example have circular holes of 10 mm diameter. The finer material separated in this manner is removed by the conveyor belt 16, to form a heap 18 of toxic-noxious material for despatch to a controlled dump.

The remaining material leaving the rotary screen 14 is fed by a conveyor belt 20 to a slurrying unit 22 comprising a rotary drum immersed in water. The slurry leaving the slurrying unit 22 passes to a vibrating mesh screen 24 which separates the larger slurry solids. These latter are removed from the vibrating screen 24 by a conveyor belt 26 to form a second heap 28 of toxic-noxious material for despatch to the controlled dump.

In the aforedescribed case of waste from the ceramics industry, the vibrating screen call have a mesh size of 7 mm.

The remaining material leaving the slurrying unit is washed at 95 with clean water (mains or well water) fed through the pipe 52, and is removed by a conveyor belt 30 to form a heap 32 of inert material.

As stated, both the toxic-noxious material of the heap 28 and the inert material of the heap 32 are wet.

The slurry which passes through the vibrating screen 24 is fed via the pipe 34 to the slurry tank 36. A filter press 38 (or several filter presses according to plant requirements) draws from this latter tank via the pipe 40. In this manner slurry panels are obtained consisting of toxic-noxious material, which must be despatched to the controlled dump. The dirty water leaving the filter press 38 is fed to a tank 42 via a pipe 14. A purification plant 46 withdraws the dirty water from the tank 42 via the pipe 48 and purifies it. The purified water obtained in this manner is is recycled to the slurrying unit 22 via the pipe 50 and a pump (not shown).

As both the inert material of the heap 32 and the toxic-noxious material of the heap 28 are as stated wet, there is in fact a certain water consumption, although quite small.

Water make-up is therefore necessary, for which said wash water (fed through the pipe 52) for the inert material leaving the slurrying unit 22 is used, it having been found that the water quantity necessary for make-up is also sufficient for said wash.

In conclusion, at the end of the cycle a heap 18 and a substantially smaller heap 28 of material classifiable as toxic-noxious are obtained, and which must be conveyed to the controlled dump, plus a heap of clean, useful inert material which can be reused in various ways, such as for back-filling.

In the aforesaid case, in which typical ceramic industry waste is treated, the inert material recovered is of the order of 20-30% by volume of the starting waste material. There is thus the significant advantage of substantially reducing the volume of the material to be despatched to the controlled dump, and of upgrading the starting material by partly transforming it into material which is still usable.

Obviously, for other types of industrial waste said percentages can be substantially different.

The waste material must contain a significant percentage of inert material preferably of fairly large size (exceeding 10 mm) mixed with toxic-noxious material which is finer or at least disintegrates in water.

The plant according to the invention substantially improves the economics of bonificating illicit dumps of the aforesaid type, and thus constitutes a significant incentive in the environmental salvaging of areas comprising such dumps.

## Claims

1. A plant for recovering inert material contained in industrial waste classified as toxic-noxious, of the type containing a high volume percentage of inerts, the inert material being usable for back-filling or similar use, comprising a feed hopper (10) for the toxic-noxious waste material; a rotary screen (14) continuously fed by the feed hopper (10) to separate the finer part of the toxic-noxious waste material; a slurrying unit (22) fed with the remaining material leaving the rotary screen (14); a vibrating mesh screen (24) fed with the slurry leaving the slurrying unit (22) to separate the larger slurry pieces of the toxic-noxious-waste material; means (25) for washing the remaining material leaving the slurrying unit (22) which material forms wet inert material; one or more filter press(es) (38) fed with the slurry which passes through the vibrating mesh screen (24), the press(es) (38) producing panels of toxic-noxious material; purification means (46) for the dirty water leaving the filter press(es) (38) to obtain clean water; and recirculation means (50) for the obtained clean water, to return this latter to the slurrying unit (22).

2. A plant as claimed in claim 1, wherein the clean make-up water is used for washing the inert material leaving the slurrying unit.

3. A plant as claimed in any one of the preceding claims, wherein conveyor belts (12,20,16,26,30) are provided for handling of the solid material between the various parts of the plant and removing the material produced by the plant.

4. A plant as claimed in any one of the preceding claims, wherein a tank (36) is provided for collecting the slurry leaving the slurrying unit (22), said tank feeding the filter press(es) (38).

5. A plant as claimed in any one of the preceding claims, wherein a tank (42) is provided for collecting the dirty water leaving the filter press (38) or filter presses, said tank feeding the water purification plant (46).

## Patentansprüche

1. Anlage zur Wiedergewinnung von Inertmaterial, das in Industrieabwasser enthalten ist, welches als toxisch-giftig eingestuft wird, von der Art, die einen großen Volumenanteil von inerten Materialien enthält, wobei das inerte Material zur Wiederauffüllung oder für einen ähnlichen Zweck verwendbar ist, mit einem Aufgabetrichter (10) für das toxischgiftige Abfallmaterial; mit einem drehbaren Sieb (14), das kontinuierlich von dem Aufgabetrichter (10) gespeist wird, um den feineren Teil des toxisch-giftigen Abfallmaterials abzutrennen; mit einer Aufschlämmungseinheit (22), die von dem verbleibenden Material gespeist wird, welches das drehbare Sieb (14) verläßt; mit einem vibrierenden Gittersieb (24), das von dem Schlamm gespeist wird, der die Aufschlämmungseinheit (22) verläßt, um die größeren Schlammstücke des toxisch-giftigen Abfallmaterials abzutrennen; mit Mitteln (25) zum Waschen des verbleibenden Materials, das die Aufschlämmungseinheit (22) verläßt und das feuchte inerte Material bildet; wobei ein oder mehrere Filterpressen (38) mit dem Schlamm gespeist werden, der durch das vibrierende Gittersieb (24) hindurchtritt, wobei die Presse(n) (38) Scheiben von toxisch-giftigem Material produzieren; mit Reinigungsmitteln (46) für das schmutzige Wasser, das die Filterpresse(n) (38) verläßt, um sauberes Wasser zu erhalten; und mit Rezirkulationsmitteln (50) für das erhaltene saubere Wasser, um dieses zu der Aufschlämmungseinheit (22) zurückzuleiten.

2. Anlage nach Anspruch 1, bei der das saubere Nachfüllwasser verwendet wird, um das inerte Material zu waschen, das die Aufschlämmungseinheit verläßt.

3. Anlage nach einem der vorhergehenden Ansprüche, bei der Förderbänder (12, 20, 16, 26, 30) vorgesehen sind, um das feste Material zwischen den verschiedenen Teilen der Anlage zu handhaben und um das von der Anlage produzierte Material zu entfernen.

4. Anlage nach einem der vorhergehenden Ansprüche, wobei ein Tank (36) vorgesehen ist, um den Schlamm zu sammeln, der die Aufschlämmungseinheit (22) verläßt, wobei der Tank die Filterpresse(n) (38) speist.

5. Anlage nach einem der vorhergehenden Ansprüche, wobei ein Tank (42) vorgesehen ist, um das schmutzige Wasser zu sammeln, das die Filterpresse (38) oder Filterpressen verläßt, wobei der Tank die Wasserreinigungsanlage (46) speist.

## Revendications

1. Installation pour récupérer des matières inertes contenues dans des déchets industriels classés toxiques-nocifs, du type contenant un fort pourcentage en volume de matières inertes, les matières inertes pouvant être utilisées à des fins de remblayage ou similaire, comprenant une trémie d'alimentation (10) pour les déchets toxiquesnocifs ; un tamis rotatif (14) alimenté en continu par la trémie d'alimentation (10) pour séparer les particules fines des déchets toxiques-nocifs ; une unité de formation de boues (22) recevant les matières résiduelles en provenance du tamis rotatif (14) ; un tamis vibrant (24) alimenté avec la boue provenant de l'unité de formation de boues (22) pour séparer les plus grosses particules de boues des déchets toxiques-nocifs ; un moyen (25) pour laver les matières résiduelles en provenance de l'unité de formation de boues (22), lesquelles matières forment une matière inerte humide ; un ou plusieurs filtre(s)-presse(s) (38) recevant la boue qui a traversé le tamis vibrant (24), le(s) filtrespresse(s) (38) produisant des plaques de matières toxiques-nocives ; un moyen de purification (46) de l'eau souillée provenant de(s) filtre(s)-presse(s) 38 afin d'obtenir de l'eau claire ; et un moyen de recirculation (50) pour renvoyer l'eau claire obtenue vers l'unité de formation de boues (22).

2. Installation selon la revendication 1, caractérisée en ce que l'eau claire d'appoint est utilisée pour laver les matières inertes provenant de l'unité de formation de boues.

3. Installation selon l'une quelconque des revendications précédentes, caractérisée en ce que des tapis convoyeurs (12, 20, 16, 26, 30) sont prévus pour la manutention des matières solides entre les différents éléments de l'installation et pour l'évacuation des matières produites par l'installation.

4. Installation selon l'une quelconque des revendications précédentes, caractérisée en ce qu'un réservoir (36) est prévu pour récupérer la boue provenant de l'unité de formation de boues (22), ledit réservoir alimentant le(s) filtre(s)-presse(s) (38).

5. Installation selon l'une quelconque des revendications précédentes, caractérisée en ce qu'un réservoir (42) est prévu pour récupérer l'eau souillée quittant le(s) filtre(s)-presse(s) (38), ledit réservoir alimentant l'installation de purification d'eau (46)
